# FASCICULE DE BREVET EUROPEEN

(11) **EP 2 576 141 B1**
(45) Date de publication et mention de la délivrance du brevet: **04.03.2015**
(21) Numéro de dépôt: 11726914.2
(22) Date de dépôt: 27.05.2011
(51) Int. Cl.: B24D 3/20, B24D 3/28, C08G 63/52, C08G 63/676, C09J 167/06, B24D 11/00

(54) **COMPOSITION ADHESIVE RENFERMANT UN POLYESTER INSATURE A TERMINAISON ACIDE CARBOXYLIQUE ET UTILISATIONS**
HAFTZUSAMMENSETZUNG MIT EINEM CARBONSÄURETERMINIERTEN UNGESÄTTIGTEN POLYESTER UND VERWENDUNGEN DAVON
ADHESIVE COMPOSITION CONTAINING A CARBOXYLIC-ACID-TERMINATED UNSATURATED POLYESTER AND USES THEREOF

(30) Priorité: 28.05.2010 FR 1054157
(43) Date de publication de la demande: 10.04.2013
(73) Titulaire: SAINT-GOBAIN RECHERCHE, 93300 Aubervilliers (FR)
(72) Inventeur: JASINSKA, Lidia, PL-80809 Gdansk (PL); KONING, Cornelis Eme, NL-6446 DJ Brunssum (NL); ARNAUD, Alix, F-92120 Montrouge (FR); HOUGA, Clément, F-78800 Houilles (FR)
(86) Numéro de dépôt international: PCT/FR2011/051214
(87) Numéro de publication internationale: WO 2011/148112

(56) Documents cités:
- EP-A1- 1 832 566
- WO-A1-2005/040295
- FR-A1- 2 235 170
- US-A- 3 479 323
- US-A- 3 485 733
- US-A- 3 915 671
- US-A- 4 938 784

## Description

L'invention se rapporte au domaine des liants destinés à lier ensemble des éléments en matière naturelle ou synthétique, notamment minéraux, tels que des particules abrasives, des fibres de verre ou de roche, et des fils de verre.

L'invention concerne plus particulièrement une composition adhésive qui renferme au moins un polyester insaturé à terminaison acide carboxylique, hydrosoluble ou dispersable dans l'eau, et au moins un monomère éthyléniquement insaturé.

Il est connu d'utiliser pour la fabrication de produits minéraux incorporant des particules, des fibres ou des fils minéraux des résines thermodurcissables à base de formaldéhyde, notamment des résines urée-formaldéhyde, mélamine-formaldéhyde et phénol-formaldéhyde. Ces résines présentent une bonne aptitude à réticuler, sont solubles dans l'eau, possèdent une bonne affinité pour les minéraux et sont relativement peu coûteuses.

Il subsiste cependant dans ces résines une proportion variable de formaldéhyde libre qui peut persister dans le produit final. Or, on sait que le formaldéhyde peut s'avérer préjudiciable pour les opérateurs sur lignes industrielles, les consommateurs finaux et l'environnement.

La réglementation en matière d'émissions de formaldéhyde devenant de plus en plus contraignante oblige les fabricants de produits minéraux à rechercher des solutions alternatives aux résines précitées.

On connaît aussi des compositions pouvant être utilisées en tant qu'adhésifs.

Ainsi, US 3 485 733 A décrit des polymères télomérisés en solution aqueuse aptes à réticuler sous des radiations ionisantes. Ces polymères présentent à leurs extrémités des insaturations éthyléniques.

FR 2 235 170 A1 divulgue une composition aqueuse photodurcissable pour la préparation de plaques photograhiques, utilisable aussi en tant qu'adhésif. La composition contient un polyester insaturé, un agent de réticulation et un photosensibilisateur. Le polyester insaturé est obtenu par réaction d'un glycol et d'un acide dicarboxylique insaturé, en excès molaire.

US 3 915 671 décrit un matériau abrasif obtenu par moulage de grains abrasifs, d'une résine polyester non réticulée et d'un catalyseur de réticulation. La résine non réticulée est un mélange d'un polyester insaturé obtenu par réaction d'un diacide insaturé et d'un glycol, et d'un monomère insaturé.

La présente invention a pour but de proposer une composition adhésive ne contenant pas de formaldéhyde, apte à lier entre eux des éléments constitués de matières naturelles ou synthétiques, notamment minérales, en particulier des particules abrasives, des fibres de verre ou de roche et des fils de verre.

La composition adhésive conforme à la présente invention est une composition aqueuse qui contient au moins un polyester insaturé à terminaison acide carboxylique, hydrosoluble ou dispersable dans l'eau, et au moins un monomère éthyléniquement insaturé conformément à la revendication 1.

Par « composition aqueuse » on entend une composition qui renferme au moins 20 % en poids d'eau, de préférence au plus 70 % et mieux encore de 40 à 60 %.

Dans le but d'améliorer la dispersion du polyester insaturé et/ou du monomère éthyléniquement insaturé, on peut substituer une partie de l'eau par un solvant organique, par exemple le tétrahydrofurane (THF) ou le méthyltétrahydrofurane.

La proportion d'eau remplacée par le solvant est au plus égale à 50 % en poids, de préférence au plus 30 % et avantageusement au plus 20 %.

Le polyester insaturé conforme à la présente invention est un co-polyester d'au moins un monosaccharide ou un oligosaccharide et d'au moins un acide polycarboxylique insaturé ou un anhydride d'acide insaturé dont au moins une des extrémités est modifiée par un résidu d'acide carboxylique.

La préparation du co-polyester insaturé comprend une étape de synthèse d'un co-polyester à terminaisons hydroxyles et une étape d'estérification d'au moins une fonction hydroxyle terminale par un acide polycarboxylique.

Dans la première étape, on fait réagir les fonctions hydroxyles du monosaccharide ou de l'oligosaccharide avec les fonctions carboxyliques portées par l'acide polycarboxylique insaturé et/ou qui résultent de l'hydrolyse de l'anhydride d'acide insaturé pour former un co-polyester à terminaisons hydroxyles

Le monosaccharide ou l'oligosaccharide conforme à la présente invention comprend au moins deux fonctions hydroxyles aptes à réagir avec les fonctions carboxyliques portées par l'acide polycarboxylique précité ou obtenues par l'hydrolyse de l'anhydride d'acide correspondant. De préférence, le monosaccharide et l'oligosaccharide comprennent au plus 35 fonctions hydroxyles, et mieux encore au plus 15.

L'oligosaccharide comprend au plus 10 résidus de monosaccharide, de préférence au plus 4.

Conformément à l'invention, les monosaccharides renferment de préférence 3 à 8 atomes de carbone, en particulier sont choisis parmi les hexoses tels que le glucose, le mannose, le galactose, les dérivés de ces hexoses sous la forme d'alcools alicycliques ou les dérivés déshydratés de ces alcools alicycliques tels que l'isosorbide; et les oligosaccharidessont par exemple le maltose, le cellobiose, le lactose, le sucrose, le tréhalose, le raffinose, le stachyose et les dextrines.

Le monosaccharide préféré est l'isosorbide.

Le rapport du nombre d'équivalent de fonctions hydroxyles au nombre d'équivalent de fonctions carboxyliques varie de 1,01/1 à 2/1, de préférence 1,05/1 à 1,50/1 et mieux encore 1,10/1 à 1,2/1.

L'acide polycarboxylique insaturé comprend au moins deux fonctions carboxyliques, de préférence au plus quatre, et avantageusement au plus trois fonctions carboxyliques, et au moins une insaturation éthylénique.

A titre d'exemples d'acide polycarboxylique insaturé, on peut citer les acides aliphatiques, linéaires ou ramifiés, tels que l'acide fumarique, l'acide itaconique, l'acide maléique, l'acide traumatique, l'acide mésaconique, l'acide citraconique et l'acide aconitique, les acides cycliques tels que l'acide 2,5-furane dicarboxylique (acide déhydromucique) et les acides aromatiques tels que phtalique, l'acide tétrahydrophtalique, l'acide isophtalique, l'acide téréphtalique, l'acide trimésique et l'acide pyromellitique.

L'acide polycarboxylique peut également être obtenu à partir de l'anhydride d'acide insaturé correspondant qui, par hydrolyse, génère les fonctions carboxyliques. L'anhydride d'acide est par exemple l'anhydride maléique.

De préférence, l'acide polycarboxylique insaturé et l'anhydride d'acide insaturé sont monomériques.

Une partie du monosaccharide ou de l'oligosaccharide conforme à l'invention peut être remplacée par un autre polyol, notamment le glycérol. En règle générale, la proportion du polyol différent du monosaccharide ou de l'oligosaccharide n'excède pas 60 % en mole de l'ensemble des polyols, de préférence 40 %.

De la même manière, une partie de l'acide polycarboxylique insaturé et/ou de l'anhydride d'acide insaturé peut être remplacée par un acide polycarboxylique saturé contenant au moins deux fonctions carboxyliques ou un anhydride d'acide saturé.

De préférence, l'acide carboxylique saturé continent au plus quatre fonctions carboxyliques, et avantageusement au plus trois fonctions carboxyliques.

A titre d'exemples d'un tel acide, on peut citer l'acide oxalique, l'acide malonique, l'acide succinique, l'acide glutarique, l'acide adipique, l'acide pimélique, l'acide subérique, l'acide azélaïque, l'acide sébacique, l'acide malique, l'acide tartrique, l'acide tartronique, l'acide aspartique, l'acide glutamique, l'acide camphorique, l'acide citrique, l'acide tricarballique, l'acide 1,2,4-butanetricarboxylique, l'acide hémimellitique, l'acide trimellitique et l'acide 1,2,3,4-butanetétracarboxylique.

La proportion en mole de l'acide polycarboxylique saturé et de l'anhydride d'acide saturé par rapport à l'ensemble des acides polycarboxyliques et des anhydrides d'acide est au plus égale à 90 %, de préférence au plus égale à 80 %.

La réaction de co-polymérisation du saccharide ou de l'oligosaccharide, de l'acide polycarboxylique insaturé et/ou de l'anhydride d'acide insaturé, et le cas échéant des composés précités (autre polyol et/ou acide polycarboxylique saturé ou anhydride d'acide saturé), est effectuée en présence d'un catalyseur, par exemple le n-butoxyde de titane (IV). Ledit agent est généralement ajouté en une quantité représentant 0,005 à 4 % en mole de l'acide polycarboxylique et de l'anhydride d'acide, de préférence 0,010 à 1 %.

Eventuellement, un agent antioxydant peut être introduit dans le milieu de polymérisation, par exemple le 1,3,5-triméthyl-2,4,6-tris(3,5-di-ter-butyl-4-hydroxybenzyl)benzène, en une quantité au plus égale à 1 % en poids du poids de l'acide polycarboxylique et de l'anhydride d'acide.

La co-polymérisation est généralement effectuée à une température qui varie de 140 à 230°C, de préférence 150 à 220°C et avantageusement 160 à 210°C. A titre d'exemple, la co-polymérisation peut être réalisée en plusieurs étapes, notamment selon le cycle thermique suivant: 160°C pendant 1 à 15 heures, 210°C pendant 2 à 10 heures à la pression atmosphérique et 210°C pendant 1 à 5 heures sous une pression réduite, de l'ordre de 3 à 5 mbar. Le cycle thermique préféré est : 160°C pendant 1 à 10 heures, 210°C pendant 2 à 5 heures à la pression atmosphérique et 210°C pendant 1 à 4 heures sous une pression réduite.

Les polyesters insaturés préférés sont des co-polyesters d'isosorbide et d'anhydride maléique, d'isosorbide, d'anhydride maléique et d'acide succinique, ou d'isosorbide, d'anhydride maléique et de glycérol.

Dans la deuxième étape, on modifie le co-polyester insaturé en faisant réagir au moins un des groupes hydroxyles en position terminale avec un acide polycarboxylique pour former des liaisons ester.

L'acide polycarboxylique comprend au moins deux groupes carboxyliques, de préférence au moins trois. Il est choisi parmi les acides polycarboxyliques insaturés ou saturés précités, et de préférence il s'agit de l'acide citrique.

La réaction d'estérification est généralement effectuée à une température qui varie de 120 à 230°C, de préférence 140 à 200°C, pendant une durée qui peut aller de 0,5 à 10 heures, de préférence 1 à 6 heures. Notamment, l'estérification peut être réalisée en plusieurs étapes, par exemple selon le cycle thermique suivant : 160°C pendant 1 à 15 heures, 210°C pendant 2 à 10 heures à la pression atmosphérique et 210°C pendant 1 à 5 heures sous une pression réduite, de l'ordre de 3 à 5 mbar. Le cycle thermique préféré est : 160°C pendant 1 à 10 heures, 210°C pendant 2 à 5 heures à la pression atmosphérique et 210°C pendant 1 à 4 heures sous une pression réduite.

Le co-polyester à terminaisons acide carboxylique particulièrement préféré est un co-polyester d'isosorbide, d'anhydride maléique et d'acide succinique dont au moins une des extrémités est modifiée par un résidu d'acide citrique.

Comme déjà mentionné, la composition adhésive conforme à l'invention comprend au moins un monomère éthyléniquement insaturé utilisé en tant qu'agent de réticulation du co-polyester à terminaison acide carboxylique.

Le monomère éthyléniquement insaturé est choisi parmi les monomères appartenant au groupe constitué par les acides (méth)acryliques et les (méth)acrylates, en particulier le 2-hydroxyéthyl méthacrylate, le méthacrylamide, la N-vinylpyrrolidone, et les acides carboxyliques insaturés, notamment les acides polycarboxyliques insaturés mentionnés précédemment, en particulier l'acide itaconique et l'acide citraconique, et leurs anhydrides, en particulier l'anhydride maléique.

Le monomère éthyléniquement insaturé est de préférence soluble dans l'eau.

Le monomère éthyléniquement insaturé est ajouté à la composition aqueuse adhésive dans des proportions telles que le rapport pondéral du monomère insaturé au co-polyester à terminaison acide carboxylique varie de 1/10 à 1 /1 et de préférence 1/3 à 1 /1.

Un initiateur de radicaux libres peut être introduit dans la composition aqueuse adhésive afin d'amorcer la réticulation. A titre d'exemple, on peut citer les peroxydes, notamment le peroxyde de 2-butanone, les persulfates et l'azobisisobutyronitrile (AIBN). La quantité dudit initiateur représente généralement 0,5 à 2 % du poids total du co-polyester à terminaison acide carboxylique et du monomère éthyléniquement insaturé.

La réticulation de la composition aqueuse adhésive est effectuée à une température qui peut aller de 50 à 180°C, de préférence 60 à 150°C, pendant une durée qui peut varier de 5 minutes à 6 heures, de préférence 15 minutes à 2 heures.

La composition adhésive aqueuse conforme à la présente invention peut être utilisée pour lier tout type d'éléments composés de matière naturelle ou synthétique, en particulier des éléments minéraux et avantageusement des particules abrasives, des fibres de verre ou de roche et des fils de verre, notamment destinés à la fabrication de voiles et de tissus.

La composition adhésive aqueuse selon l'invention est tout particulièrement destinée à être utilisée pour fabriquer des articles abrasifs appliqués (« coated abrasives » en anglais), notamment des abrasifs dont le support est constitué d'un papier ou d'un tissu à base de coton, de polyester ou d'un mélange de coton et de polyester. Ces articles abrasifs constituent un autre objet de la présente invention.

L'exemple qui suit permet d'illustrer l'invention sans toutefois la limiter. Dans cet exemple :
- la masse molaire (en g/mole) est déterminée par chromatographie par perméation de gel utilisant une colonne de silice modifiée (PFG^{®} commercialisée par PSS), du 1,1,1,3,3,3-hexafluoro-2-propanol (HFIP) en tant qu'éluant et des étalons de polyméthacrylates de méthyle de masse molaire donnée;
- l'indice de polydispersité est le rapport de la masse molaire en masse (Mₘ) à la masse molaire en nombre (Mₙ);
- le nombre d'iode (en g I₂/100 g de co-polyester) est mesuré par titration dans la N-méthyl-pyrrolidone. Il est représentatif du taux d'insaturation du co-polyester;
- l'indice d'acide et l'indice d'hydroxyle sont mesurées par titration à l'aide d'un potentiomètre. Ils sont exprimés en mg KOH/g de co-polyester;
- la température de transition vitreuse (Tg) est effectuée par DSC (« Differential Scanning Calorimetry »), à la vitesse de 10°C/minute, sous azote;
- la stabilité thermique du produit réticulé est évaluée en mesurant la température correspondant à une perte de masse de 10 %;
- la fraction soluble du produit réticulé (en %) dans le chloroforme et l'eau est mesurée par pesée.

### EXEMPLE

### a) synthèse du co-polyester isosorbide-anhydride maléique-acide succinique

Dans un ballon équipé d'une colonne Vigreux et d'un condenseur Dean-Stark, on introduit 17,24 g (0,12 mole) d'isosorbide, 2,65 g (0,027 mole) d'anhydride maléique, 9,56 g (0,080 mole) d'acide succinique et 0,122 g (1,6 x 10⁻⁴ mole) de 1,3,5-triméthyl-2,4,6-tris(3,5-di-ter-butyl-4-hydroxybenzyl)-benzène. Le ballon est chauffé à 160°C jusqu'à l'obtention d'un mélange réactionnel uniforme.

On ajoute ensuite 7,3 mg n-butoxyde de titane (IV) en solution dans 2,8 g de toluène. On place le mélange réactionnel sous atmosphère d'argon et on le traite dans les conditions suivantes :
- montée progressive à 230°C
- 230°C pendant 3,5 heures sous pression atmosphérique
- 230°C pendant 3,5 heures sous pression réduite (3-5 mbar).

Après refroidissement à la température ambiante, le mélange réactionnel est dissous dans du chloroforme et précipité dans du méthanol à environ 10°C. Le mélange est ensuite filtré, lavé plusieurs fois et séché sous vide à 85-90°C.

Le co-polyester obtenu présente une masse molaire en nombre (Mn) égale à 3300 g/mole, un indice de polydispersité égal à 2,1, un indice d'acide égal à 6,6 mg KOH/g, un indice d'hydroxyle égal à 79,4 mg KOH/g et une température de transition vitreuse (Tg) égale à 50°C.

### b) estérification par l'acide citrique

Dans un ballon équipé d'une colonne Vigreux et d'un condenseur Dean-Stark, on introduit 20 g du co-polyester de l'étape a) et 5,98 g (0,03 mole) d'acide citrique. Le mélange réactionnel est placé sous atmosphère d'argon et il est chauffé à 160°C pendant 2,5 heures à la pression atmosphérique, puis pendant 3 heures supplémentaires sous pression réduite (3-5 mbar).

Le co-polyester modifié par l'acide citrique présente une masse molaire en nombre (Mn) égale à 3610 g/mole, un indice de polydispersité égal à 4,0, un taux d'insaturation égal à 21 g I₂/100 g, un indice d'acide égal à 156,4 mg KOH/g et une température de transition vitreuse Tg égale à 70°C.

### c) réticulation du polyester modifié par l'acide citrique

Dans un ballon tricol, on introduit 21,8 g d'eau, 10 g du co-polyester obtenu à l'étape b), 1,48 g d'une solution ammoniacale à 32 % et une quantité variable de 2-hydroxyéthyl-méthacrylate (HEMA), N-vinylpyrrolidone (NVP) ou méthacryl-amide (Mam). Le rapport pondéral du co-polyester modifié par l'acide citrique au monomère insaturé varie de 2/1 à 10/1 (tableau 1).

On chauffe le mélange à 50°C et on ajoute ensuite 0,2 g de peroxyde de 2-butanone et 3 mg de 2-éthylhexanoate de cobalt (II) en tant qu'accélérateur de la réaction au mélange précité. Après homogénéisation complète du mélange, on arrête le chauffage.

Le mélange est déposé sur un substrat plan (en verre ou en aluminium) et réticulé pendant 15 minutes à 85°C puis 12 heures à 115°C.

Les caractéristiques du produit réticulé sont données dans le tableau 1 suivant.

**Tableau 1**

| Ex. | Monomère insaturé | Rapport pondéral co-polyester/monomère insaturé | Tg (°C) | Stabilité thermique (°C) | Fraction soluble (%) | |
|---|---|---|---|---|---|---|
| | | | | | chloroforme | eau |
| 1.1 | HEMA | 2/1 | 53,5 | 289,4 | 32,5 | 21,6 |
| 1.2 | | 3,3/1 | 53,4 | 314,3 | 28,4 | 20,0 |
| 1.3 | | 10/1 | 54,9 | 292,8 | 26,4 | 16,1 |
| 1.4 | Mam | 3,3/1 | 50,6 | 252,6 | n. d. | n.d. |
| 1.5 | NVP | 3,3/1 | 44,3 | 252,4 | 33,2 | 25,4 |

### d) obtention d'un article abrasif appliqué

La composition adhésive de l'exemple 1.3 est utilisée pour fabriquer un papier abrasif.

La composition adhésive a une durée de vie d'au moins 24 heures (viscosité stable durant cette période).

On applique une première couche de la composition adhésive (épaisseur: 150 µm) et on répartit ensuite des grains abrasifs de manière homogène sur ladite couche. L'ensemble est chauffé à 85°C pendant 15 minutes. On observe une bonne adhésion de la couche d'adhésif sur le papier et un bon ancrage des grains abrasifs (ceux-ci ne se détachent pas lorsqu'ils sont soumis au test consistant à passer la main à la surface des grains).

On applique une deuxième couche de la composition adhésive afin de recouvrir les grains abrasifs et on traite l'ensemble à 60°C pendant 50 minutes. Le papier abrasif ainsi obtenu est dénué de pégosité.

Ce papier abrasif subit ensuite un traitement thermique supplémentaire (post-cuisson) à 120°C pendant 2 heures.

On constate que la deuxième couche d'adhésif adhère correctement à la première couche, recouvre les grains abrasifs de manière satisfaisante et les maintient efficacement.

De plus, le test de pelage manuel du papier abrasif montre une rupture cohésive dans le papier, ce qui dénote une très bonne adhésion de la composition adhésive au support.

## Revendications

1. Composition adhésive aqueuse, notamment destinée à lier des éléments composés de matière naturelle ou synthétiques, contenant au moins un polyester insaturé hydrosoluble ou dispersable dans l'eau, et au moins un monomère éthyléniquement insaturé, **caractérisée en ce que** le polyester insaturé est un co-polyester d'au moins un monosaccharide ou un oligosaccharide et d'au moins un acide polycarboxylique insaturé ou un anhydride d'acide insaturé, et **en ce qu**'au moins une des extrémités dudit co-polyester est modifiée par un résidu d'acide polycarboxylique saturé ou insaturé.

2. Composition selon la revendication 1, **caractérisée en ce qu**'elle renferme au moins 20 % en poids d'eau, de préférence au plus 70 % et mieux encore de 40 à 60 %.

3. Composition selon la revendication 1 ou 2, **caractérisée en ce que** le monosaccharide ou l'oligosaccharide comprend au plus 35 fonctions hydroxyles, de préférence au plus 15.

4. Composition selon l'une des revendications 1 à 3, **caractérisée en ce que** l'oligosaccharide comprend au plus 10 résidus de monosaccharide et de préférence au plus 4.

5. Composition selon la revendication 1 à 3, **caractérisée en ce que** le monosaccharide est le glucose, le mannose, le galactose, un dérivé de ces hexoses sous la forme d'alcool alicyclique ou un dérivé déshydraté de cet alcool alicyclique tel que l'isosorbide.

6. Composition selon l'une des revendications 1 à 4, **caractérisée en ce que** l'oligosaccharide est le maltose, le cellobiose, le lactose, le sucrose, le tréhalose, le raffinose, le stachyose ou une dextrine.

7. Composition selon l'une des revendications 1 à 6, **caractérisée en ce que** le polyester insaturé présente un rapport du nombre d'équivalent de fonctions hydroxyles au nombre d'équivalent de fonctions carboxyliques qui varie de 1,01/1 à 2/1, de préférence 1,05/1 à 1,50/1 et mieux encore 1,10/1 à 1,2/1.

8. Composition selon l'une des revendications 1 à 7, **caractérisée en ce que** l'acide polycarboxylique insaturé comprend au moins deux fonctions carboxyliques, de préférence au plus quatre, et avantageusement au plus trois fonctions carboxyliques, et au moins une insaturation éthylénique.

9. Composition selon l'une des revendications 1 à 8, **caractérisée en ce que** l'acide polycarboxylique insaturé et l'anhydride d'acide insaturé sont monomériques.

10. Composition selon l'une des revendications 1 à 9, **caractérisée en ce qu**'une partie du monosaccharide ou de l'oligosaccharide est remplacée par un autre polyol, en particulier le glycérol, en une proportion n'excédant pas 60 % en mole de l'ensemble constitué par le monosaccharide, l'oligosaccharide et l'autre polyol, de préférence 40 %.

11. Composition selon l'une des revendications 1 à 10, **caractérisée en ce qu'**une partie de l'acide polycarboxylique insaturé et/ou de l'anhydride d'acide insaturé est remplacée par un acide polycarboxylique saturé contenant au moins deux fonctions carboxyliques ou un anhydride d'acide saturé.

12. Composition selon la revendication 11, **caractérisée en ce que** l'acide carboxylique saturé contient au plus quatre fonctions carboxyliques, et de préférence au plus trois fonctions carboxyliques.

13. Composition selon la revendication 11 ou 12, **caractérisée en ce que** la proportion en mole de l'acide polycarboxylique saturé et de l'anhydride d'acide saturé par rapport à l'ensemble des acides polycarboxyliques et des anhydrides d'acide est au plus égale à 90 %, de préférence au plus égale à 80 %.

14. Composition selon l'une des revendications 1 à 13, **caractérisée en ce que** le co-polyester est un co-polyester d'isosorbide et d'anhydride maléique; d'isosorbide, d'anhydride maléique et d'acide succinique; d'isosorbide, de 1,3-propanediol et d'anhydride maléique; ou d'isosorbide, d'anhydride maléique et de glycérol.

15. Composition selon l'une des revendications 1 à 14, **caractérisée en ce que** le résidu d'acide polycarboxylique en position terminale est un résidu d'acide citrique.

16. Composition selon l'une des revendications 1 à 15, **caractérisée en ce que** le monomère éthyléniquement insaturé est choisi parmi les monomères appartenant au groupe constitué par les acides (méth)acryliques et les (méth)acrylates, la N-vinylpyrrolidone, le méthacrylamide, les acides carboxyliques insaturés et leurs anhydrides.

17. Composition selon l'une des revendications 1 à 16, **caractérisée en ce que** le rapport pondéral du monomère insaturé au co-polyester à terminaison acide polycarboxylique varie de 1/10 à 1/1 et de préférence 1/3 à 1/1.

18. Composition selon l'une des revendications 1 à 17, **caractérisée en ce qu'**elle contient en outre un initiateur de radicaux libres choisi parmi les peroxydes, notamment le peroxyde de 2-butanone, les persulfates et l'azobisisobutyronitrile (AIBN).

19. Composition selon la revendication 18, **caractérisée en ce que** la quantité d'initiateur de radicaux libres représente 0,5 à 2 % du poids total du co-polyester à terminaison acide polycarboxylique et du monomère éthyléniquement insaturé.

20. Article abrasif appliqué contenant des particules abrasives liées par une composition adhésive selon l'une des revendications 1 à 19.

21. Article selon la revendication 20, **caractérisé en ce qu**'il s'agit d'un abrasif dont le support est constitué d'un papier ou d'un tissu à base de coton, de polyester ou d'un mélange de coton et de polyester.

## Patentansprüche

1. Wässrige Klebstoffzusammensetzung, insbesondere zum Binden von Elementen bestimmt, welche aus natürlichen oder synthetischen Materialien zusammengesetzt sind, enthaltend wenigstens einen ungesättigten, in Wasser löslichen oder in Wasser dispergierbaren Polyester und wenigstens ein ungesättigtes ethylenisches Monomer, dadurch gekennnzeichnet, dass der ungesättigte Polyester ein Co-Polyester wenigstens eines Monosaccharides oder eines Oligosaccharides und wenigstens einer ungesättigten Polycarbonsäure oder einem ungesättigten Säureanhydrid ist und dass wenigstens eines der Enden des besagten Co-Polyesters mittels eines gesättigten oder ungesättigten Polycarbonsäurerestes modifiziert ist.

2. Zusammensetzung nach Anspruch 1, **dadurch gekennzeichnet, dass** sie wenigstens 20 Gew.-% Wasser, vorzugsweise bis zu 70% und besonders bevorzugt von 40 bis 60% enthält.

3. Zusammensetzung nach Anspruch 1 oder 2, **dadurch gekennzeichnet, dass** das Monosaccharid oder das Oligosaccharid höchstens 35 Hydroxylfunktionen, vorzugsweise höchstens 15 enthält.

4. Zusammensetzung nach einem der Ansprüche 1 bis 3, **dadurch gekennzeichnet, dass** das Oligosaccharid höchstens 10 Monosaccharidreste, vorzugsweise höchstens 4 enthält.

5. Zusammensetzung nach Anspruch 1 bis 3, **dadurch gekennzeichnet, dass** das Monosaccharid Glucose, Mannose, Galactose, ein Derivat dieser Hexosen in alicyclischer Alkoholform oder ein dehydriertes Derivat dieses alicyclischen Alkohols, beispielsweise Isosorbid, ist.

6. Zusammensetzung nach einem der Ansprüche 1 bis 4, **dadurch gekennzeichnet, dass** das Oligosaccharid Maltose, Cellobiose, Lactose, Sucrose, Trehalose, Raffinose, Stachyose oder ein Dextrin ist.

7. Zusammensetzung nach einem der Ansprüche 1 bis 6, **dadurch gekennzeichnet, dass** der ungesättigte Polyester ein Verhältnis der Anzahl der Hydroxylfunktionsäquivalente zur Anzahl der Carboxylfunktionsäquivalente aufweist, welche von 1,01/1 bis 2/1, vorzugsweise 1,05/1 bis 1,50/1 und besonders bevorzugt 1,10/1 bis 1,2/1 variiert.

8. Zusammensetzung nach einem der Ansprüche 1 bis 7, **dadurch gekennzeichnet, dass** die ungesättige Polycarbonsäure wenigstens 2 Carboxylfunktionen, vorzugsweise höchstens 4, vorteilhafterweise höchstens 3 Carboxylfunktionen und wenigstens eine ethylenische Doppelbindung aufweist.

9. Zusammensetzung nach einem der Ansprüche 1 bis 8, **dadurch gekennzeichnet, dass** die ungesättigte Polycarbonsäure und das ungesättigte Säureanhydrid monomer vorliegen.

10. Zusammensetzung nach einem der Ansprüche 1 bis 9, **dadurch gekennzeichnet, dass** ein Teil des Monosaccharids oder des Oligosaccharids ersetzt ist durch ein anderes Polyol, insbesondere Glycerol, in einem Verhältnis, welches 60 Mol-%, vorzugsweise 40%, bezogen auf die Gesamtheit, bestehend aus dem Monosaccharid, dem Oligosaccharid und dem anderen Polyol nicht überschreitet.

11. Zusammensetzung nach einem der Ansprüche 1 bis 10, **dadurch gekennzeichnet, dass** ein Teil der ungesättigten Polycarbonsäure und/oder des ungesättigten Säureanhydrids ersetzt ist durch eine gesättigte Polycarbonsäure, welche wenigstens zwei Carboxylfunktionen enthält oder durch ein gesättigtes Säureanhydrid.

12. Zusammensetzung nach Anspruch 11, **dadurch gekennzeichnet, dass** die gesättigte Carbonsäure höchstens vier Carboxylfunktionen und vorzugsweise höchstens drei Carboxylfunktionen enthält.

13. Zusammensetzung nach Anspruch 11 oder 12, **dadurch gekennzeichnet, dass** das Molverhältnis von gesättigter Polycarbonsäure und dem gesättigten Säureanhydrid, bezogen auf die Gesamtheit von Polycarbonsäuren und Säureanyhdriden kleiner oder gleich 90%, vorzugsweise kleiner oder gleich 80%, beträgt.

14. Zusammensetzung nach einem der Ansprüche 1 bis 13, **dadurch gekennzeichnet, dass** der Copolyester ein Copolyester aus Isosorbid und Maleinsäureanhydrid; von Isosorbid, Maleinsäureanhydrid und Bernsteinsäure; von Isosorbid und 1,3-Propandiol und Maleinsäureanhydrid; oder von Isosorbid, Maleinsäureanhydrid und Glycerol ist.

15. Zusammensetzung nach einem der Ansprüche 1 bis 14, **dadurch gekennzeichnet, dass** der endständige Polycarbonsäurerest ein Zitronensäurerest ist.

16. Zusammensetzung nach einem der Ansprüche 1 bis 15, **dadurch gekennzeichnet, dass** das ungesättigte ethylenische Monomer ausgewählt wird aus der Gruppe der Monomeren bestehend aus Methacrylsäuren und Methacrylaten, N-Vinylpyrrolidon, Methacrylamid, ungesättigten Carbonsäuren und ihren Anhydriden.

17. Zusammensetzung nach einem der Ansprüche 1 bis 16, **dadurch gekennzeichnet, dass** das Gewichtsverhältnis von ungesättigtem Monomer zu Copolyester am Polycarbonsäureende von 1/10 bis 1/1 und vorzugsweise 1/3 bis 1/1 variiert.

18. Zusammensetzung nach einem der Ansprüche 1 bis 17, **dadurch gekennzeichnet, dass** sie zusätzlich einen Starter für freie Radikale enthält, welcher ausgewählt ist aus den Peroxiden, insbesondere 2-Butanon-peroxid, den Persulfaten und Azabisisobutyronitril (AIBN).

19. Zusammensetzung nach Anspruch 18, **dadurch gekennzeichnet, dass** die Startermenge für freie Radikale 0,5 bis 2 Gew.-% bezogen auf das Gesamtgewicht aus Copolyester am Polycarbonsäureende und ungesättigtem ethylenischen Monomer beträgt.

20. Zum Schleifen verwendeter Gegenstand, enthaltend abrasive Partikel, welche mit einer Klebstoffzusammensetzung gemäß einem der Ansprüche 1 bis 19 gebunden sind.

21. Gegenstand nach Anspruch 20, **dadurch gekennzeichnet, dass** es sich um ein Abrasiv handelt, dessen Träger zusammengesetzt ist aus einem Papier oder einem Gewebe auf Basis von Baumwolle, Polyester oder einer Mischung aus Baumwolle und Polyester.

## Claims

1. Aqueous adhesive composition, in particular intended for bonding elements composed of natural or synthetic material, containing at least one unsaturated polyester which is water-soluble or water-dispersible, and at least one ethylenically unsaturated monomer, **characterized in that** the unsaturated polyester is a copolyester of at least one monosaccharide or one oligosaccharide and of at least one unsaturated polycarboxylic acid or one unsaturated acid anhydride, and **in that** at least one of the ends of said polyester is modified with a saturated or unsaturated polycarboxylic acid residue.

2. Composition according to Claim 1, **characterized in that** it contains at least 20% by weight of water, preferably at most 70% and better still from 40 to 60%.

3. Composition according to Claim 1 or 2, **characterized in that** the monosaccharide or the oligosaccharide comprises at most 35 hydroxyl functions, preferably at most 15.

4. Composition according to Claims 1 to 3, **characterized in that** the oligosaccharide comprises at most 10 monosaccharide residues and preferably at most 4.

5. Composition according to Claims 1 to 3, **characterized in that** the monosaccharide is glucose, mannose, galactose, a derivative of these hexoses in the form of an alicyclic alcohol or a dehydrated derivative of this alicyclic alcohol, such as isosorbide.

6. Composition according to one of Claims 1 to 4, **characterized in that** the oligosaccharide is maltose, cellobiose, lactose, sucrose, trehalose, raffinose, stachyose or a dextrin.

7. Composition according to one of Claims 1 to 6, **characterized in that** the unsaturated polyester exhibits a ratio of the number of hydroxyl function equivalents to the number of carboxylic function equivalents which ranges from 1.01/1 to 2/1, preferably 1.05/1 to 1.50/1 and even better still 1.10/1 to 1.2/1.

8. Composition according to one of Claims 1 to 7, **characterized in that** the unsaturated polycarboxylic acid comprises at least two carboxylic functions, preferably at most four, and advantageously at most three carboxylic functions, and at least one ethylenic unsaturation.

9. Composition according to one of Claims 1 to 8, **characterized in that** the unsaturated polycarboxylic acid and the unsaturated acid anhydride are monomeric.

10. Composition according to one of Claims 1 to 9, **characterized in that** a part of the monosaccharide or of the oligosaccharide is replaced with another polyol, in particular glycerol, in a proportion not exceeding 60 mol% of the grouping made up of the monosaccharide, the oligosaccharide and the other polyol, preferably 40%.

11. Composition according to one of Claims 1 to 10, **characterized in that** a part of the unsaturated polycarboxylic acid and/or of the unsaturated acid anhydride is replaced with a saturated polycarboxylic acid containing at least two carboxylic functions or a saturated acid anhydride.

12. Composition according to Claim 11, **characterized in that** the saturated carboxylic acid contains at most four carboxylic functions, and preferably at most three carboxylic functions.

13. Composition according to Claim 11 or 12, **characterized in that** the mole proportion of the saturated polycarboxylic acid and of the saturated acid anhydride relative to all the polycarboxylic acids and the acid anhydrides is at most equal to 90%, preferably at most equal to 80%.

14. Composition according to one of Claims 1 to 13, **characterized in that** the copolyester is a copolyester of isosorbide and maleic anhydride; of isosorbide, maleic anhydride and succinic acid; of isosorbide, 1,3-propanediol and maleic anhydride; or of isosorbide, maleic anhydride and glycerol.

15. Composition according to one of Claims 1 to 14, **characterized in that** the polycarboxylic acid residue in the end position is a citric acid residue.

16. Composition according to one of Claims 1 to 15, **characterized in that** the ethylenically unsaturated monomer is chosen from monomers belonging to the group made up of (meth)acrylic acids and (meth)acrylates, N-vinylpyrrolidone, methacrylamide, unsaturated carboxylic acids and anhydrides thereof.

17. Composition according to one of Claims 1 to 16, **characterized in that** the weight ratio of the unsaturated monomer to the copolyester comprising a polycarboxylic acid end group ranges from 1/10 to 1/1 and preferably 1/3 to 1/1.

18. Composition according to one of Claims 1 to 17, **characterized in that** it also contains a free-radical initiator chosen from peroxides, in particular 2-butanone peroxide, persulfates and azobisisobutyronitrile (AIBN).

19. Composition according to Claim 18, **characterized in that** the amount of free-radical initiator represents 0.5 to 2% of the total weight of the copolyester comprising a polycarboxylic acid end group and of the ethylenically unsaturated monomer.

20. Coated abrasive containing abrasive particles bonded by an adhesive composition according to one of Claims 1 to 19.

21. Abrasive according to Claim 20, **characterized in that** it is an abrasive of which the support consists of a paper or a tissue based on cotton, polyester or a mixture of cotton and polyester.
